## Europäisches Patentamt
## European Patent Office
## Office européen des brevets

(11) Veröffentlichungsnummer: **0 207 383**
**B1**

(12) # EUROPÄISCHE PATENTSCHRIFT

(45) Veröffentlichungstag der Patentschrift:
06.09.89

(51) Int. Cl.⁴: **B 60 J 3/02**

(21) Anmeldenummer: **86108370.7**

(22) Anmeldetag: **19.06.86**

(54) Schwenklager für Fahrzeugsonnenblenden.

(30) Priorität: **05.07.85 DE 3524098**

(43) Veröffentlichungstag der Anmeldung:
**07.01.87 Patentblatt 87/2**

(45) Bekanntmachung des Hinweises auf die Patenterteilung:
**06.09.89 Patentblatt 89/36**

(84) Benannte Vertragsstaaten:
**DE FR GB IT SE**

(56) Entgegenhaltungen:
**DE-U- 1 921 866**
**US-A- 2 939 741**
**US-A- 3 399 923**

(73) Patentinhaber: **Gebr. Happich GmbH,**
**Postfach 10 02 49 Clausenbrücke 1,**
**D-5600 Wuppertal 1 (DE)**

(72) Erfinder: **Zwirner, Gerhard, Bachstrasse 120,**
**D-5657 Haan (DE)**

ACTORUM AG

**Beschreibung**

Die Erfindung bezieht sich auf ein Schwenklager für Fahrzeugsonnenblenden, bestehend aus einem an einer Fahrzeugkarosserie befestigbaren Lagergehäuse mit einer konischen Lagerbohrung, die von einem einen entsprechend konischen Abschnitt aufweisenden Lagerschenkel einer L-förmig ausgebildeten Sonnenblendenachse drehbeweglich durchsetzt ist, wobei der konische Abschnitt durch eine Schraubendruckfeder, die sich einendig auf dem Lagergehäuse und anderendig an einer an dem aus der Lagerbohrung heraustretenden, sich axial an den konischen Abschnitt anschließenden Endbereich des Lagerschenkels angeordneten Scheibe abstützt, in die Lagerbohrung hineingezogen wird, und wobei der im Sonnenblendenkörper eingelagerte Tragschenkel der Sonnenblendenachse sich in Normallage etwa parallel zur Windschutzscheibe erstreckt und mit einer ebenfalls im Sonnenblendenkörper eingelagerten, in einem Gegenlager einrastbaren Gegenlagerachse axial fluchtet. Ein derartiges Schwenklager ist aus der DE-U-1 921 866 bekannt.

Derartige Schwenklager dienen zur einendigen Lagerung von Sonnenblenden, die sowohl klappbar vor der Frontscheibe von Fahrzeugen angeordnet sind als auch zur Seitenscheibe hin verschwenkt werden können. Die durch den im oberen Randbereich der Sonnenblenden einendig eingelagerten Tragschenkel der L-förmig ausgebildeten Sonnenblendenachse definierte Drehachse wird durch eine am anderen Endbereich der Sonnenblende angeordnete Gegenlagerachse, die lösbar in ein an der Fahrzeugkarosserie befestigtes Gegenlagergehäuse einrastbar ist, unterstützt. Vom Schwenklager und gleichzeitig vom Gegenlager getragen, ist die Sonnenblende nur dann, wenn sie vor der Frontscheibe angeordnet ist, während das Schwenklager die Tragefunktion allein übernimmt, wenn die Sonnenblende zu einer Seitenscheibe hin geschwenkt ist. Um das wiederholte Einrasten der Gegenlagerachse in den entsprechenden Einführungsschlitz des Gegenlagergehäuses sicherzustellen, ist es wichtig, daß der Trageschenkel der Sonnenblendenachse exakt mit der Lageraufnahme des Gegenlagergehäuses fluchtet, weil andernfalls kein behinderungsfreies Abziehen und Wiedereinstecken der Gegenlagerachse aus bzw. in die Lageröffnung gewährleistet ist und erhebliche Rückfederungsspannungen, die im Extremfall zu Verformungen im Bereich der Befestigungsposition des Schwenklagers führen, auftreten können. Ein genaues Ausfluchten von Trageschenkel der Sonnenblendenachse und Lageröffnung des Gegenlagergehäuses wird schon durch die im allgemeinen vorhandenen Bautoleranzen in der Rohkarosse erschwert.

Durch das DE-U-1 921 866 ist ein Schwenklager für Fahrzeugsonnenblenden mit einem an einer Fahrzeugkarosserie befestigbaren Lagergehäuse und einer L-förmig ausgebildeten Sonnenblendenachse bekanntgeworden. Der Lagerschenkel der Sonnenblendenachse sitzt in einer Lagerbohrung eines Drehkörpers, der seinerseits verschwenkbar in einer im Lagergehäuse ausgebildeten Lageraufnahme angeordnet ist. Dieses bekannte Schwenklager besitzt zwar den Vorteil einer Verstellbarkeit der Sonnenblendenachse, jedoch muß dieser Vorteil durch einen sehr komplizierten und kostenaufwendigen Aufbau des Schwenklagers erkauft werden.

Der vorliegenden Erfindung liegt nun die Aufgabe zugrunde, ein Schwenklager der eingangs genannten Art so zu gestalten, daß eine schnell und einfach zu erzielende Ausfluchtung zwischen dem Trageschenkel und der Lageröffnung des Gegenlagers mit besonders einfachen und kostengünstigen Mitteln und geringstmöglicher Anzahl von Einzelteilen gewährleistet ist.

Diese Aufgabe wird erfindungsgemäß durch die im Kennzeichen des Anspruches 1 enthaltenen Merkmale gelöst.

In bevorzugter Ausgestaltung der Erfindung kann dabei vorgesehen sein, daß die Lagerbohrung in Einsteckrichtung gesehen, zunächst einen Öffnungsquerschnitt von kreisrunder Ausbildung aufweist, der sich zum Auslaufende der Lagerbohrung hin kontinuierlich zu einem als Langloch gestalteten Öffnungsquerschnitt erweitert.

Die besonderen Vorteile der Erfindung liegen zum einen in der Verstellbarkeit der Sonnenblendenachse senkrecht zur Ebene des Lagerschenkels und des damit ermöglichten Ausgleichs maßlicher Ungenauigkeiten in der Einbauposition der Sonnenblenden sowie zum anderen in der besonderen Einfachheit und der kostengünstigen Herstellbarkeit der diesen Erfolg begründenden Mittel, wobei insbesondere hervorzuheben ist, daß die Verstellbarkeit ohne Einsatz von zusätzlichen Bauteilen, also allein durch die vorgesehene Änderung des Lagerbohrungs-Öffnungsquerschnittes erreicht werden konnte. Für die Herstellung des Lagergehäuses ist auch keine neue Werkzeugkonzeption, sondern lediglich eine geringfügige Änderung des die Lagerbohrung bildenden Schiebers oder Formteils erforderlich. Bereits im Einsatz befindliche Fertigungswerkzeuge können daher ohne besonderen Aufwand umgerüstet werden.

Ein Ausführungsbeispiel der Erfindung wird im folgenden anhand der Zeichnung näher erläutert. Es zeigen:

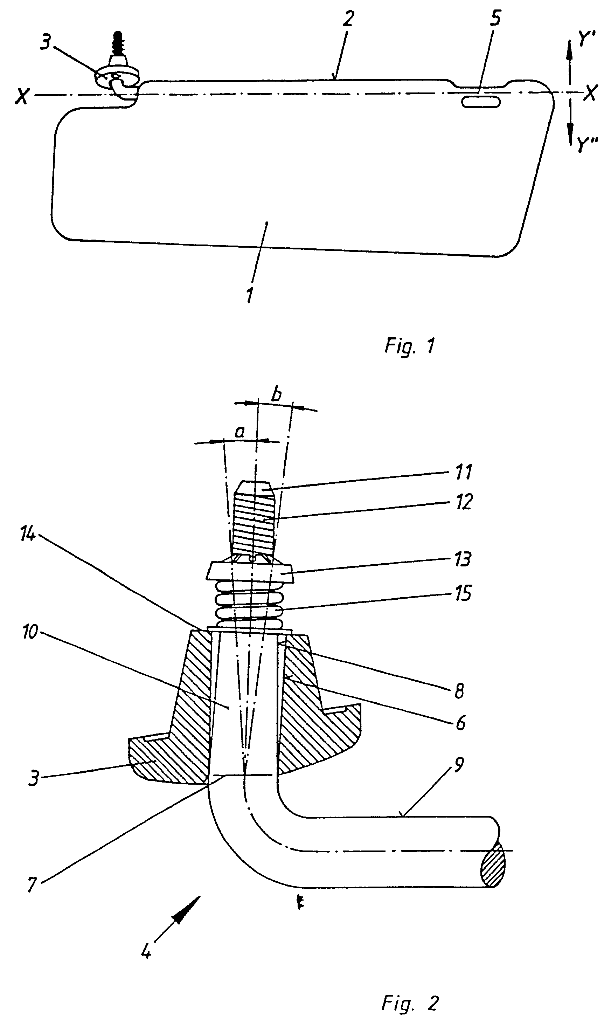

Figur 1 eine Fahrzeugsonnenblende in Draufsicht und

Figur 2 das Schwenklager der Sonnenblende nach Figur 1 im vergrößerten Maßstab und mit im Vertikalschnitt dargestelltem Lagergehäuse.

Die Sonnenblende besteht im wesentlichen aus einem annähernd rechteckig und plattenförmig ausgebildeten Sonnenblendenkörper 1 mit einem an einem Endbereich der oberen Längskante 2 angeordneten, aus einem Lagergehäuse 3 und einer Sonnenblendenachse 4 gebildeten Schwenklager und einer am anderen Endbereich derselben Längskante 2 angeordneten Gegenlagerachse 5, die lösbar in ein nicht dargestelltes Gegenlagergehäuse einsteckbar ist.

Das Lagergehäuse 3 weist eine Lagerbohrung 6 auf, welche am auf der Zeichnung unteren Bohrungseingang (bei 7) einen Öffnungsquerschnitt von kreisrunder Ausbildung besitzt. Vom Bohrungseingang zum Bohrungsausgang erweitert sich dieser Öffnungsquerschnitt kontinuierlich zu einem als Langloch gestalteten Öffnungsquerschnitt. Im übrigen ist die Lagerbohrung 6 konisch ausgebildet und verjüngt sich vom Bohrungseingang zum Bohrungsausgang.

Die Sonnenblendenachse 4 ist L-förmig ausgebildet und umfaßt einen Lagerschenkel 8 und einen im Sonnenblendenkörper 1 gelagerten Trageschenkel 9 und kann aus Stahl gegebenenfalls aber auch aus Kunststoff bestehen. Der Lagerschenkel 8 weist einen konischen Abschnitt 10 auf, der in den Konus der Lagerbohrung 6 paßt. An den konischen Abschnitt 10 schließt sich axial ein Endbereich 11 mit einer Außenverzahnung oder einem Außengewinde 12 an, der eine aufgeratschte Scheibe 13 trägt. Zwischen der Scheibe 13 und dem dieser benachbarten Stirnende 14 des Lagergehäuses 3 ist eine Schraubendruckfeder 15 abgestützt, wodurch der konische Abschnitt 10 in die Lagerbohrung 6 hineingezogen wird.

Der Trageschenkel 9 und die Gegenlagerachse 5 bilden die Drehachse X–X, um die der Sonnenblendenkörper aus einer etwa parallel zum Dachhimmel ausgerichteten Nichtgebrauchslage in eine Gebrauchslage, in der sich der Sonnenblendenkörper vor der Windschutzscheibe befindet, geklappt werden kann. Weicht nun die im nicht gezeigten Gegenlagergehäuse befindliche Lageröffnung in ihrer Anordnung von der Drehachse X–X in Richtung Y' oder Y'' ab, so läßt sich ein Ausgleich durch Verschwenken des Lagerschenkels 8 in der Lagerbohrung 6 bewirken; denn durch Anheben des Sonnenblendenkörpers 1 in Richtung Y' ergibt sich eine selbsttätige Verstellung des Lagerschenkels 8 über den Bereich der Winkelverstellbarkeit a und bei einer Bewegung des Sonnenblendenkörpers 1 in Richtung Y'' eine dieser entgegengesetzte Winkelverstellbarkeit b. Es versteht sich von selbst, daß die große Durchmesserachse des Langlochs sich parallel zur Drehachse X–X erstreckt.

**Patentansprüche**

1. Schwenklager für Fahrzeugsonnenblenden, bestehend aus einem an einer Fahrzeugkarosserie befestigbaren Lagergehäuse (3) mit einer konischen Lagerbohrung (6), die von einem einen entsprechend konischen Abschnitt (10) aufweisenden Lagerschenkel (8) einer L-förmig ausgebildeten Sonnenblendenachse (4) drehbeweglich durchsetzt ist, wobei der konische Abschnitt (10) durch eine Schraubendruckfeder (15), die sich einendig auf dem Lagergehäuse (3) und anderendig an einer an dem aus der Lagerbohrung (6) heraustretenden, sich axial an den konischen Abschnitt (10) anschließenden Endbereich (11) des Lagerschenkels (8) angeordneten Scheibe (13) abstützt, in die Lagerbohrung (6) hineingezogen wird, und wobei der im Sonnenblendenkörper (1) eingelagerte Trageschenkel (9) der Sonnenblendenachse (4) sich in Normallage etwa parallel zur Windschutzscheibe erstreckt und mit einer ebenfalls im Sonnenblendenkörper (1) eingelagerten, in einem Gegenlager einrastbaren Gegenlagerachse (5) axial fluchtet, dadurch gekennzeichnet, daß die Lagerbohrung (6), zumindest über einen Teilbereich ihrer axialen Erstreckung, einen als Langloch ausgebildeten Öffnungsquerschnitt aufweist, wobei sich die große Achse des Langlochs parallel zum Trageschenkel (9) der Sonnenblendenachse (4) in ihrer Normallage erstreckt.

2. Schwenklager nach Anspruch 1, dadurch gekennzeichnet, daß die Lagerbohrung (6), in Einsteckrichtung des Lagerschenkels (8) gesehen, zunächst einen Öffnungsquerschnitt von kreisrunder Ausbildung aufweist, der sich zum Auslaufende der Lagerbohrung (6) hin kontinuierlich zu einem als Langloch gestalteten Öffnungsquerschnitt erweitert.

**Claims**

1. A swivel bearing for a vehicle sun visor, the bearing comprising a bearing casing (3) fastenable to the vehicle body and having a tapered bore (6) for the accommodation and rotation therein of a correspondingly tapered section (10) of the bearing leg (8) of an L-shaped sun visor shaft (4), wherein the tapered section (10) is drawn into the bore (6) by a compression spring (15) resting at its one end on the bearing casing (3) and at its other end on a disc (13) arranged on an end section (11) of the leg (8) which protrudes from the bore (6) and is an axially extending continuation of the tapered section (10), and wherein the sun visor shaft's (4) supporting leg (9), which is embedded in the visor body (1) and being latchable to an outer bearing, characterized in that the apertural cross-section of the bore (6) is, at least along a part of its axial extent, that of an oblong hole, and in that the major axis of the oblong hole extends parallel with the supporting leg (9) of the visor shaft (4) in the latter's normal position.

2. A swivel bearing according to claim 1, characterized in that the bore's (6) apertural cross-section – viewed in the direction in which the leg (8) is to be inserted thereinto – is initially circular but continuously widens towards the bore's (6) opposite end so as to form the oblong hole.

**Revendications**

1. Palier-support à pivotement pour pare-soleil de véhicules, se composant d'un carter de palier (3) fixable sur une carrosserie de véhicule, avec un alésage de palier (6) conique, traversé mobile en rotation par un montant de palier (8) d'un axe de pare-soleil (4) réalisé en forme de L et présentant une section (10) de conicité correspondante, la section conique (10) s'appuyant au moyen d'un ressort hélicoïdal de compression (15) à une extrémité sur le carter de palier (3) et à l'autre extrémité sur une rondelle (13) disposée sur une zone d'extrémité (11) du montant de palier (8), ressortant de l'alésage de palier (6), se raccordant axialement à la section conique (10), section conique tirée dans l'alésage de palier (6), et le montant support (9) de l'axe de pare-soleil (4), monté dans le corps (1) de pare-soleil, s'étendant en position normale approximativement parallèlement à la rondelle de pare-soleil et aligné axialement sur un contre-axe de palier (5), également monté dans le corps (1) de pare-soleil, encliquetable dans un contre-palier, caractérisé en ce que l'alésage de palier (6) présente, au moins sur une zone partielle de son étendue axiale, une section d'ouverture réalisée sous forme de trou oblong, le grand axe du trou oblong s'étendant parallèlement au montant support (9) de l'axe de pare-soleil (4) dans sa position normale.

2. Palier-support à pivotement selon la revendication 1, caractérisé en ce que, vu dans le sens d'enfichage du montant de palier (8), l'alésage de palier (6) présente d'abord une section d'ouverture de réalisation circulaire, s'élargissant continuellement vers l'extrémité de sortie de l'alésage de palier (6), en une section d'ouverture en forme de trou oblong.

Fig. 1

Fig. 2